# EUROPEAN PATENT APPLICATION

(11) **EP 2 429 255 A1**
(43) Date of publication of application: **14.03.2012**
(21) Application number: 10782919.4
(22) Date of filing: 26.04.2010
(51) Int. Cl.: H04W 76/06

(54) **METHOD, SYSTEM AND EVOLVED NODE B FOR IMPLEMENTING SERVICE RELEASE**

(30) Priority: 02.06.2009 CN 200910203262
(71) Applicant: ZTE Corporation, Shenzhen, Guangdong 518057 (CN)
(72) Inventor: WANG, Xintai, Shenzhen Guangdong 518057 (CN)
(74) Representative: Sander Jakobsson, Sofia Ellinor
(86) International application number: PCT/CN2010/072205
(87) International publication number: WO 2010/139215

(57) **Abstract**

The present invention discloses a method for implementing service release, and the method comprises: in a process of service release in a non access stratum (NAS) layer, a radio resource control (RRC) connection reestablishment between a user equipment (UE) and an evolved Node B (eNB) being induced by a reconfiguration failure in an access layer of the UE, and after the RRC connection reestablishment is completed, said eNB including an establishment or modification service list which comprises identities of all services but a service to be released in the UE in a RRC connection reconfiguration message sent to the UE; and after receiving the RRC connection reconfiguration message, the UE recovering the services corresponding to the identities included in the establishment and modification service list.. The present invention also discloses a corresponding system as well as an eNB. The present invention reduces the possibility of service release failure, the possibility of call-drop of all services in the UE and the signaling overhead in the system, thus improves perceptions of the users.

## Description

### Technical Field

The present invention relates to the wireless communication field of Long Term Evolution (LTE), and more especially, to a method, system and Evolution NodeB (eNB) for implementing service release.

### Background of the Related Art

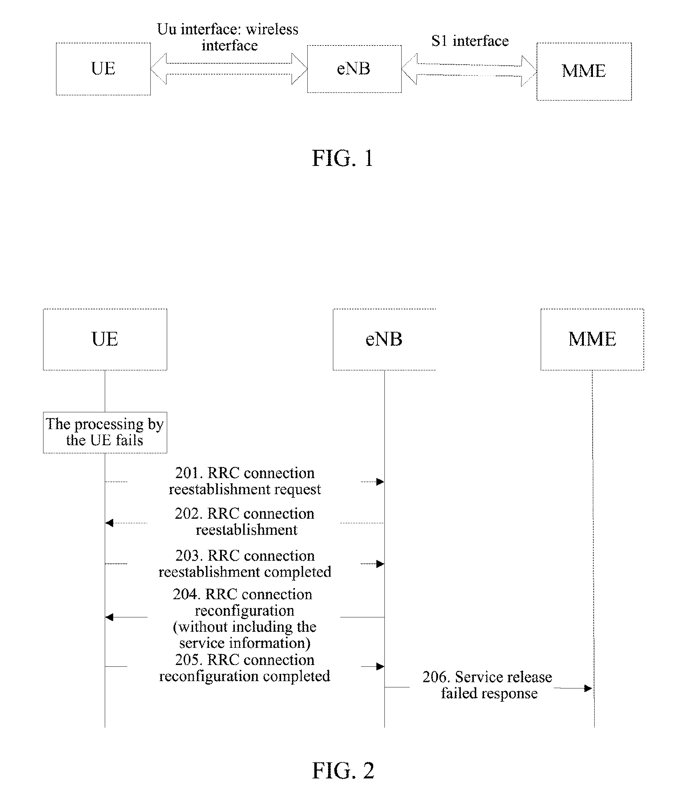

In the LTE system, the connection relationship between a user equipment (UE), an eNB and a mobility management entity (MME) is as shown in FIG. 1. Wherein, the interface between the UE and the eNB is Uu interface, the interface between the eNB and the MME is S1 interface. Messages transmitted between the UE and the eNB as well as between the eNB and the MME are encoded with Abstract Syntax Notation One (ASN.1), so are the received messages.

Services between the MME and the eNB are identified by the E-UTRAN Radio Bearer Identity (E-RabId), while between the UE and the eNB are identified by the Data Radio Bearer Identity (DrbId), the E-RabId corresponds to the DrbId one by one. The signaling between the UE and the eNB is identified by the signaling Radio Bearer Identity (SrbId).

Service deletion means that when not all services but a certain service such as a video call, a voice call or a certain downloading is completed, the UE triggers the MME to release various resources occupied by the service.

Service deletion (also called service release) between the UE and the MME can be initiated by the Non Access Stratum (NAS) layer of the UE or the MME, and in the access layer the MME initiates a service bearer release request. That is, the service release is implemented in two layers: service release in the NAS layer and service release in the access layer.

Generally, the process of service release comprises: the UE initiates a resource modification request in the NAS layer (the identity is bearer deletion and includes the identity of the service to be deleted); after the MME receives the request, it sends a deactivation request in the NAS layer (the message is included in the service release request) to the eNB; after the eNB receives the message, it sends a Radio Resource Control (RRC) connection reconfiguration message to the UE; after releasing the service, the UE sends a RRC connection reconfiguration completed message to the eNB, and the eNB sends a deactivation accepted message to the eNB.

In the above process, after receiving the RRC connection reconfiguration message, the UE might fails to complete the process of RRC connection reconfiguration due to the failure of the wireless link. At this time, the UE initiates the process of RCC connection reestablishment. As shown in FIG. 2, the process comprises the following steps:
201. the UE sends a RRC connection reestablishment request to the eNB;
202. after the eNB receives the request, it reestablishes or reconfigures the local UE resource and replies the UE with a RRC connection reestablishment message in order to establish the RRC connection;
203. after the UE reestablishes the local entity, it replies the eNB with a RRC connection reestablishment completed message;
204. after the RRC connection reestablishment is completed, the eNB initiates a process of RRC connection reconfiguration; the eNB sends the UE a RRC connection reconfiguration message without including any information related to the service so as to notify the UE to recover the services existing before the RRC connection is reestablished;
205. after the UE recovers the service, it sends the eNB a RRC connection reconfiguration completed message;
206. the eNB sends a service release failed response to the MME to indicate that the current service release fails.

The above process has a relatively severe problem, that is, when a user requests to release one service, since the reconfiguration in the access layer of the UE fails, the RRC connection should be reestablished, afterwards, the process of RRC connection reconfiguration is initiated by the eNB so that the UE recovers the service which should be released by it, thus the service release fails. Moreover, repeated RRC connection reconfiguration failure and the RRC connection reestablishment can make the RRC connection reestablishment process and the RRC connection reconfiguration process at the Uu interface trapped into a cycle process. This is contrary to the user's willing, and meanwhile, the MME cannot handle this case, the only thing the MME can do is to release the UE context, which will induce all the user's services being interrupted.

### Content of the Invention

The present invention provides a method, system and eNB for implementing service release to solve the problem that the service to be released cannot be released because the configuration in the access layer of the UE fails in the process of service release.

In order to solve the above problem, the present invention provides a method for implementing service release, and the method comprises:
in a process of service release in a non access stratum (NAS) layer, after a radio resource control (RRC) connection reestablishment between a user equipment (UE) and an evolved Node B (eNB) induced by a reconfiguration failure in an access layer of the UE is completed, said eNB including an establishment or modification service list which comprises identities of all services but a service to be released in the UE in a RRC connection reconfiguration message sent to the UE; and
after receiving the RRC connection reconfiguration message, the UE recovering services corresponding to the identities in the establishment or modification service list.

The above method may also have the following features:
said RRC connection reconfiguration message further includes a deletion service list, and said deletion service list comprises the identities of all services in said UE;
after said UE receives said RRC connection reconfiguration message, the method further comprises: first releasing services corresponding to the identities included in the deletion service list;
said recovering step is: recovering the services corresponding to the identities in the establishment or modification service list.

The above method may further comprise:
said UE sending a RRC connection reconfiguration completed message to said eNB;
after receiving the message, the eNB sending a service release successful response to a mobility management entity (MME), wherein, the service release successful response includes an identity of the service to be released.

The above method may further have the following features:
if said UE fails in the RRC reconfiguration again and resends a RRC connection reestablishment request to said eNB, said eNB responding the UE with a RRC connection reestablishment declined message and responding the MME with a service release failed response.

The above method may further comprise:
said eNB sending a UE context release request to said MME; and
after receiving said UE context release request, the MME releasing resource of the UE.

The present invention further provides a method for implementing service release, and the method comprises:
during a process of service release in a non access stratum (NAS) layer, after a radio resource control (RRC) connection reestablishment between a user equipment (UE) and an evolved NodeB (eNB) induced by a reconfiguration failure in an access layer of the UE is completed, said eNB including a deletion service list which includes an identity of a service to be released in a RRC connection reconfiguration message sent to the UE; and
after receiving said RRC connection reconfiguration message, the UE recovering all services but the service to be released in the UE.

The above method may further comprise:
said UE sending a RRC connection reconfiguration completed message to the eNB; and
after receiving said RRC connection reconfiguration completed message, the eNB sending a service release successful response to a mobility management entity (MME), wherein, said service release successful response includes the identity of the service to be released.

The above method may further have the following features:
if said UE fails in RRC reconfiguration again and resends a RRC connection reestablishment request to said eNB, said eNB responding the UE with a RRC connection reestablishment declined message and responding the MME with a service release failed response.

The above method may further comprise:
said eNB sending a UE context release request to said MME;
after receiving said UE context release request, the MME releasing resource the UE.

The present invention further provides a system for implementing service release, said system comprises a user equipment (UE) and an evolved NodeB (eNB); wherein,
said eNB is configured to: during a process of service release in a non access stratum (NAS) layer, after a radio resource control (RRC) connection reestablishment between said UE and said eNB induced by reconfiguration failure in an access layer of said UE is completed, send a RRC connection reconfiguration message to said UE, where said RRC connection reconfiguration message comprises an establishment or modification service list which includes identities of all services but a service to be released in said UE;
said UE is configured to: after receiving said RRC connection reconfiguration message, recover the services corresponding to the identities included in the establishment or modification service list;
thereby supporting the service release.

The above system may further have the following features:
said RRC connection reconfiguration message further includes a deletion service list which comprises the identities of all services in said UE;
said UE is further configured to: first release the services corresponding to the identities included in the deletion service list.

The above system may further comprise a mobile management entity (MME);
said UE is further configured to: after the services are recovered, send a RRC connection reconfiguration completed message to said eNB;
said eNB is further configured to: after receiving said RRC connection reconfiguration completed message, send a service release successful message to said MME, and said service release successful response includes an identity of a service to be released;
said MME is configured to: receive said service release successful response.

The above system may further have the following features:
said UE is further configured to: resend a RRC connection reestablishment request to said eNB after a RRC reconfiguration fails again;
said eNB is further configured to: after receiving said RRC connection reestablishment request again, replying said UE with a RRC connection reestablishment declined message and replying said MME with a service release failed response.

The above system may further have the following features:
said eNB is further configured to: after receiving said RRC connection reestablishment request again, send a UE context release request to said MME;
said MME is configured to: after receiving said UE context release request, release said UE resource.

The present invention further provides a system for implementing service release, said system comprising a user equipment (UE) and an evolved nodeB (eNB); wherein,
said eNB is configured to: during a process of service release in a non access stratum (NAS) layer, after a RRC connection reestablishment between said UE and said eNB induced by a reconfiguration failure in an access layer of said UE is completed, send a RRC connection reconfiguration message to said UE, and said RRC connection reconfiguration message includes a deletion service list which includes an identity of a service to be released;
said UE is configured to: after receiving said RRC connection reconfiguration message, recovere all services but the service to be released in said UE.

The above system may further comprise a mobile management entity (MME);
said UE is further configured to: after the services are recovered, send a RRC connection reconfiguration completed message to said eNB;
said eNB is further configured to: after receiving said RRC connection reconfiguration completed message, send a service release successful response to said MME, and said service release successful response includes the identity of the service to be released;
said MME is configured to: receive said service release successful response.

The above system may further have the following features:
said UE is further configured to: resend a RRC connection reestablishment request to said eNB after a RRC reconfiguration fails again;
said eNB is further configured to: after receiving said RRC connection reestablishment request again, reply said UE with a RRC connection reestablishment declined message and reply said MME with a service release failed response.

The above system may further have the following features:
said eNB is further configured to: after receiving said RRC connection reestablishment request again, send a UE context release request to said MME;
said MME is configured to: after receiving said UE context release request, release resource of the UE.

The present invention further provides an evolved NodeB (eNB) for implementing service release, used in a scenario that in a process of service release in a non access stratum (NAS) layer, a radio resource control (RRC) connection reestablishment between a UE and the eNB induced by a reconfiguration failure in an access layer of said UE is completed, said eNB comprising a transmission module and a list organization module; wherein,
said list organization module is configured to: add identities of all services but a service to be released into an establishment or modification service list;
said transmission module is configured to: send a RRC connection reconfiguration message to said UE, said RRC connection reconfiguration message including the establishment or modification service list.

The above eNB further have the following features:
said transmission module is further configured to: include a deletion service list into the RRC connection reconfiguration message, and said deletion service list comprises the identities of all services in said UE.

The present invention further provides an evolved NodeB (eNB) for implementing service release, used in a process of service release in a non access stratum (NAS) layer, and after a radio resource control (RRC) connection reestablishment between a user equipment (UE) and an evolved NodeB (eNB) induced by a reconfiguration failure in an access layer of said UE is completed, said eNB comprising a transmission module and a list organization module; wherein,
said list organization module is configured to: add an identity of a service to be released into a deletion service list;
said transmission module is configured to: send a RRC connection reconfiguration message to said UE, said RRC connection reconfiguration message including said deletion service list.

Compared with the prior art, the present invention avoids the problem that the deleted services are recovered in the process of the first RRC connection reconfiguration after the RRC connection reestablishment induced by the failure of the first reconfiguration of the UE during a service release. Therefore, the present invention reduces the possibility of the service release failure, the possibility of call-drop of all services in the UE and the signaling overhead in the system, improves perception of the users, and avoids the multiple cycles in the processes of RRC connection reestablishment and the RRC connection reconfiguration.

### Brief Description of Drawings

FIG. 1 is a diagram of the interface relationship between a UE, an eNB and a MME in the prior art;
FIG. 2 is a flow chart of service release in the prior art;
FIG. 3 is a flow chart of service release in accordance with an embodiment of the present invention;
FIG. 4 is a flow chart of the procedure when the RRC connection reconfiguration fails again after the service release fails and is reestablished in accordance with an embodiment of the present invention;
FIG. 5 is a structural diagram of the eNB for implementing the service release in accordance with an embodiment of the present invention.

### Preferred Embodiments of the Present Invention

The technical scheme of the present invention will be illustrated in further detail in combination with the accompanying figures and the embodiments.

The basic idea of the method in the present invention is: in the process of service release in the NAS layer, after the RRC connection reestablishment between the UE and the eNB induced by the reconfiguration failure in the access layer of the UE is completed, said eNB includes an establishment or modification service list in the RRC connection reconfiguration message sent to the UE, where the list comprises the identities of all services but the one to be released in the UE; after said UE receives the RRC connection reconfiguration message, it recovers the services corresponding to the identities in the establishment or modification service list.

The UE establishes the service successfully according to the establishment or modification service list in the RRC reconfiguration message, this process equals to release the service to be released.

Specifically, in the LTE system, the method for implementing service release might comprise the following steps:

The first step: the UE initiates a request for resource modification in the NAS layer, and said request includes the identity of the service to be released;

The second step: after the MME receives the request, it sends a service release request to the eNB, and said request includes the E-RabId of the service to be released;

The third step: after the eNB receives the service release request, it sends a RRC connection reconfiguration message to the UE, and said message includes the DrbId of the service to be released;

The fourth step: the UE fails to reconfigure the RRC connection and sends a RRC connection reestablishment request to said eNB;

The fifth step: after the eNB receives the RRC connection reestablishment request message, it reestablishes or reconfigures the local UE resource and replies the UE with a RRC connection reestablishment message with purpose of establishing the RRC connection;

The sixth step: after the UE reestablishes the local entity, it sends a RRC connection reestablishment completed message to the eNB;

The seventh step: after the eNB receives the message, it sends a RRC connection reconfiguration message to the UE, and the RRC connection reconfiguration message includes the establishment or modification service list which does not include the DrbId of the service to be released in the first step. Alternatively, the message includes the deletion service list which includes the DrbIds of all services in the UE;

The eighth step: the UE recovers the services corresponding to the DrbIds included in the establishment or modification service list. Right now, if the RRC connection reconfiguration message further includes the deletion service list, then the UE releases all services first, and then recovers the services corresponding to the DrbIds included in the establishment or modification service list.

In this step, if the RRC connection reconfiguration is successful (that is, all services corresponding to the DrbIds in the establishment or modification service list are recovered successfully), the UE sends a RRC connection reconfiguration completed message to the eNB, and after the eNB receives the message, it sends a service release successful response to the MME, and the response includes the E-RabId of the service to be released.

If the RRC connection reconfiguration fails again, said UE resends a RRC connection reestablishment request to said eNB; after the eNB receives the message, it responds the UE with a RRC connection reestablishment declined message and sends a service release failed response to said MME, said response includes the E-RabId of the service to be released. In addition, the eNB might further send a UE context release request to said MME to request for releasing the UE resource.

The corresponding system for implementing service release comprises a user equipment (UE) which needs to release service and an eNB;

During the process of service release in the NAS layer, after the RRC connection reestablishment between said UE and said eNB induced by the reconfiguration failure in the access layer of said UE is completed, said eNB is used to send a RRC connection reconfiguration message to said UE, and said RRC connection reconfiguration message comprises an establishment or modification service list which includes the identities of all services but the one to be released in the UE;

Said UE is used to recover the services corresponding to the identities in the establishment or modification service list after receiving said RRC connection reconfiguration message;

Said RRC connection reconfiguration message further includes a deletion service list which includes the identities of all services in said UE;

Said UE is further used to first release the services corresponding to the identities included in the deletion service list and then recover the services corresponding to the identities in the establishment or modification service list after receiving the RRC connection reconfiguration message.

The system further comprises a MME; said UE is further used to send a RRC connection reconfiguration completed message to said eNB after the services are recovered; said eNB is further used to send a service release successful response to said MME after receiving said RRC connection reconfiguration completed message, and said service release successful response includes the identity of the service to be released; said MME is used to receive said service release successful response.

The UE is further used to resend a RRC connection reestablishment request to said eNB again after the RRC reconfiguration fails again; the eNB is further used to reply said UE with a RRC connection reestablishment declined message and said MME with a service release failed response after receiving said RRC connection reestablishment request again.

The eNB is further used to send a UE context release request to said MME after receiving said RRC connection reestablishment request; the MME is used to release said UE resource after receiving said UE context release request.

Another method for implementing service release, and the method comprises: during the process of service release in the NAS layer, after the RRC connection reestablishment between said UE and said eNB induced by the reconfiguration failure in the access layer of said UE is completed, said eNB sends a RRC connection reconfiguration message to said UE, and said RRC connection reconfiguration message comprises a deletion service list which includes the identity of the service to be released; after the UE receives the message, it recovers all services but the one to be released in the UE. Other related steps are the same in the above description and will be omitted here.

The corresponding system for implementing service release comprises a user equipment (UE) which needs to release service and an eNB;

During the process of service release in the NAS layer, after the RRC connection reestablishment between the UE and the eNB induced by the reconfiguration failure in the access layer of the UE is completed, the eNB is used to send a RRC connection reconfiguration message to said UE, and said RRC connection reconfiguration message comprises a deletion service list which includes the identity of the service to be deleted;

The UE is used to recover all services but the one to be released in the UE after receiving said RRC connection reconfiguration message;

The system further comprises a MME; the UE is further used to send a RRC connection reconfiguration completed message to said eNB after the services are recovered; said eNB is further used to send a service release successful response to said MME after receiving said RRC connection reconfiguration completed message, and said service release successful response includes the identity of the service to be released; said MME is used to receive said service release successful response.

The UE is further used to resend a RRC connection reestablishment request to said eNB after the RRC reconfiguration fails again; the eNB is further used to reply said UE with a RRC connection reestablishment declined message and said MME with a service release failed response after receiving the RRC connection reestablishment request again.

The eNB is further used to send a UE context release request to said MME after receiving said RRC connection reestablishment request; the MME is used to release said UE resource after receiving said UE context release request.

In the following, the method of the present invention will be illustrated in further detail with a plurality of embodiments of the present invention.

### The first embodiment:

The first embodiment takes the case that: the UE has completed downloading, and triggers the MME to initiate service release, and the UE fails to process the RRC connection reconfiguration, while only the establishment or modification service list is carried when the RRC connection reconfiguration is performed as an example to illustrate the present invention.

Suppose that the user has three services whose IDs are 4, 5, and 6 respectively. Wherein, 4 is the E-RabId of the default bearer (or called the default service), 5 is the E-RabId of the downloading service, and 6 is the E-RabId of the video call service. The DrbIds of the Uu interface corresponding to the three services are supposed to be 4, 5, and 6 respectively (the DrbIds are assigned by the eNB and their values are determined by the eNB).

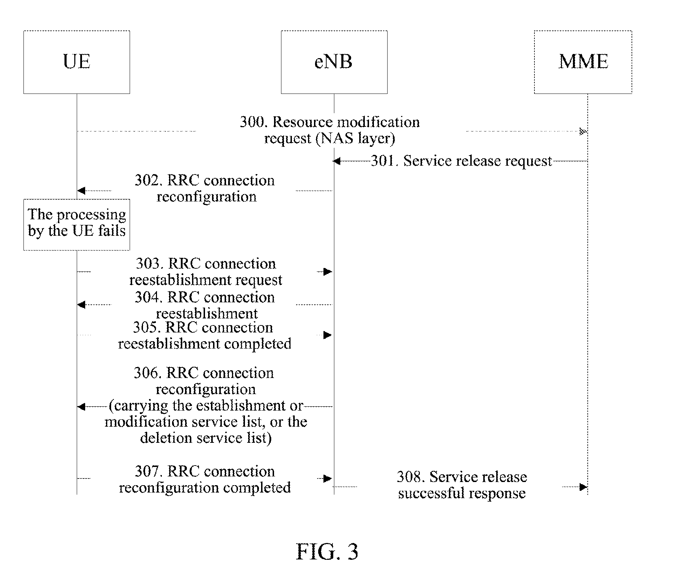

FIG. 3 shows the process of triggering service release after the downloading by the user is completed.

The interaction in the NAS layer will not be described in detail, and the present embodiment only provides the message by which the NAS layer of the UE triggers the MME to release a service as the premise of the present embodiment. In general conditions, the MME can be triggered to release a service by other reasons.

300. After the downloading service is completed, the NAS layer of the UE sends a resource modification request to the MME to request the MME to release the service whose E-RabId is 5;
301. The MME sends a service release command to the eNB, and the command includes the information that the E-RabId of the downloading service to be released is 5;
302. The eNB finds out that the corresponding DrbId of the service is 5 with the information that the E-RabId is 5, after the local configuration is completed, the eNB sends a RRC connection reconfiguration message to the UE, and the message includes the information that the DrbId of the downloading service to be released is 5;
303. The UE fails to process the RRC connection reconfiguration message and sends a RRC connection reestablishment request to recover the status of the UE before the reconfiguration;
304. The eNB configures the local entity and sends a RRC connection reestablishment message to the UE to establish the RRC connection;
305. The UE configures the local entity and sends a RRC connection reestablishment completed message to the RRC;
306. After the RRC connection reestablishment is completed, the eNB needs to send a RRC connection reconfiguration message to the UE, and the message includes the establishment or modification service list, that is, the services whose DrbIds are 4 and 6 respectively. The UE establishes the services according to the establishment or modification service list, while other services are not established;
307. The UE successfully processes the RRC connection reconfiguration and sends a RRC connection reconfiguration completed message to the eNB;

With the above procedure, the UE recovers the services whose DrbIds are 4 and 6 respectively. Compared with the first RRC connection reconfiguration, it equals releasing the service whose DrbId is 5.

308. The eNB sends a service release successful response to the MME, and the response includes the E-RabId of the released service.

The FTP downloading service is released successfully.

### The second embodiment:

The second embodiment takes the case that: the UE has completed downloading, and triggers the MME to initiate service release, and the UE fails to process the RRC connection reconfiguration, while the deletion list is carried in the RRC connection reconfiguration message after the RRC connection reestablishment is performed as an example to illustrate the present invention.

As shown in FIG. 3, supposing the user has three services whose IDs are 4, 5, and 6 respectively. Wherein, 4 is the E-RabId of the default bearer (or called the default service), 5 is the E-RabId of the downloading service, and 6 is the E-RabId of the video call service. The DrbIds of the Uu interface corresponding to the three services are supposed to be 4, 5, and 6 respectively (the DrbIds are assigned by the eNB and their values are determined by the eNB).

The process of service release is triggered after the downloading by the user is completed.

The interaction in the NAS layer will not be described in detail, and the present embodiment only provides the message by which the NAS layer of the UE triggers the MME to release a service as the premise of the present embodiment. In general conditions, the MME can be triggered to release a service by other reasons.
300. After the downloading service is completed, the NAS layer of the UE sends a resource modification request to the MME to request the MME to release the service whose E-RabId is 5;
301. The MME sends a service release command to the eNB, and the command includes the information that the E-RabId of the downloading service to be released is 5;
302. The eNB finds out that the corresponding DrbId of the service is 5 with the information that the E-RabId is 5, after the local configuration is completed, the eNB sends a RRC connection reconfiguration message to the UE, and the message includes the information that the DrbId of the downloading service to be released is 5;
303. The UE fails to process the RRC connection reconfiguration message and sends a RRC connection reestablishment request to recover the status of the UE before the reconfiguration;
304. The eNB configures the local entity and sends a RRC connection reestablishment message to the UE to establish the RRC connection;
305. The UE configures the local entity and sends a RRC connection reestablishment completed message to the eNB;
306. After the RRC connection reestablishment is completed, the eNB needs to send a RRC connection reconfiguration message to the UE, and the message includes the deletion service list, that is, the services whose DrbIds are 5;
307. After the UE receives the RRC connection reconfiguration message, it releases the service whose DrbId is 5 and then activates other services according to the deletion service list and sends a RRC connection reconfiguration completed message to the eNB.

With the above procedure, the UE recovers the services whose DrbIds are 4 and 6 respectively. Compared with the first RRC connection reconfiguration, it equals releasing the service whose DrbId is 5.

308. The eNB sends a service release successful response to the MME, and the response includes the E-RabId of the released service.

The FTP downloading service is released successfully.

### The third embodiment

The third embodiment takes the case that: the UE has completed the video call service, and triggers the MME to initiate service release, and the UE fails to process the RRC connection reconfiguration, and fails in the RRC connection again after the reestablishment as an example to illustrate the present invention.

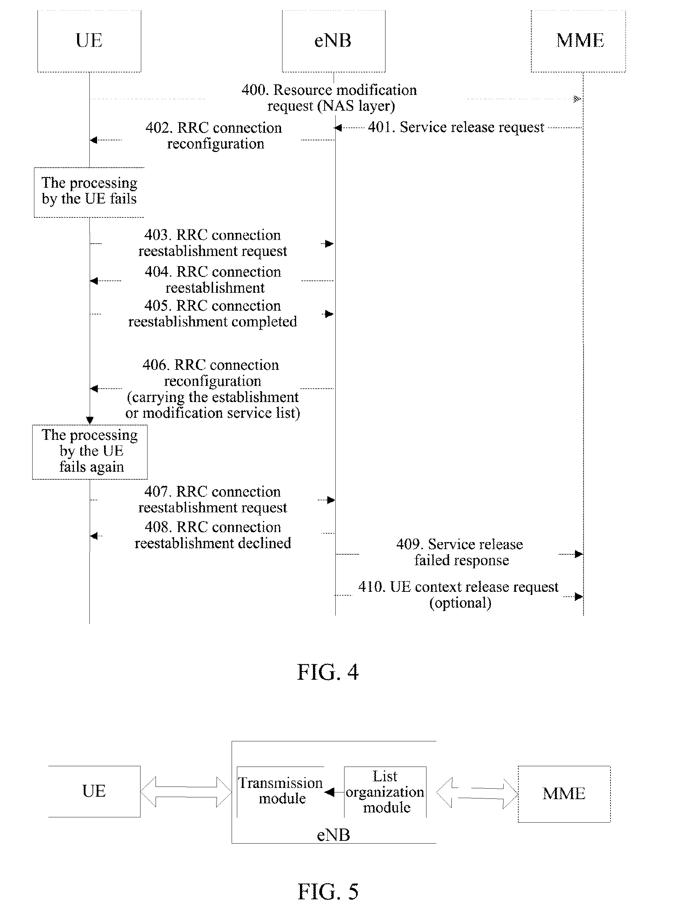

As shown in FIG. 4, supposing the user has three services whose IDs are 4, 5, and 6 respectively. Wherein, 4 is the E-RabId of the default bearer (or called the default service), 5 is the E-RabId of the downloading service, and 6 is the E-RabId of the video call service. The DrbIds of the Uu interface corresponding to the three services are supposed to be 4, 5, and 6 respectively (the DrbIds are assigned by the eNB and their values are determined by the eNB).

The process of service release is triggered after the video call service of the user is completed.

The interaction in the NAS layer will not be described in detail, and the present embodiment only provides the message by which the NAS layer of the UE triggers the MME to release a service as the premise of the present embodiment. In general conditions, the MME can be triggered to release a service by other reasons.
400. After the downloading service is completed, the NAS layer of the UE sends a resource modification request to the MME to request the MME to release the service whose E-RabId is 6;
401. The MME sends a service release command to the eNB, and the command includes the information that the E-RabId of the downloading service to be released is 6;
402. The eNB finds out that the corresponding DrbId of the service is 6 with the information that the E-RabId is 6, after the local configuration is completed, the eNB sends a RRC connection reconfiguration message to the UE, and the message includes the information that the DrbId of the downloading service to be released is 6;
403. The UE fails to process the RRC connection reconfiguration message and sends a RRC connection reestablishment request to recover the status of the UE before the reconfiguration;
404. The eNB configures the local entity and sends a RRC connection reestablishment message to the UE to establish the RRC connection;
405. The UE configures the local entity and sends a RRC connection reestablishment completed message to the RRC;
406. After the RRC connection reestablishment is completed, the eNB needs to send a RRC connection reconfiguration message to the UE, and the message includes the establishment or modification service list, that is, the services whose DrbIds are 4 and 5 respectively. The UE establishes the services according to the establishment or modification service list, while other services are not established;
407. The UE fails to reconfigure the RRC connection again and sends a RRC connection reestablishment request to the eNB again;
408. The eNB sends a RRC connection reestablishment declined message to the UE;
409. The eNB sends a service release failed response to the MME, and the response includes the E-RabId of the service to be released.

In addition, it might further comprise a step 410: the eNB sends a UE context release request to the MME.

Furthermore, an eNB for implementing service release is used in the process of service release in the NAS layer and after the RRC connection reestablishment between said UE and said eNB induced by the failure of the reconfiguration in the access layer of said UE is completed, as shown in FIG. 5, the eNB comprises a transmission module and a list organization module;

The list organization module is used to add the identities of all services but the one to be released into the establishment or modification service list; the transmission module is used to send a RRC connection reconfiguration message to said UE, and said RRC connection reconfiguration message includes the establishment or modification service list. The transmission module is further used to include the deletion service list into the RRC connection reconfiguration message, and said deletion service list includes the identities of all services in said UE.

Another eNB for implementing service release might further comprise a transmission module and a list organization module;

Said list organization module is used to add the identity of the service to be released in the UE into the deletion service list; while the transmission module is used to send a RRC connection reconfiguration message to the UE, and the message includes said deletion service list.

Of course that the present invention might have a lot of other embodiments, the person having ordinary skills in the field may make various corresponding modifications and transformations based on the present invention without departing from the spirit and essence of the present invention, however, these corresponding modifications and transformations should all be fallen into the protection scope of the appended claims of the present invention.

### Industrial Applicability

The present invention avoids the problem that the deleted services are recovered in the process of the first RRC connection reconfiguration after the RRC connection reestablishment induced by the failure of the first reconfiguration of the UE during a service release. Therefore, the present invention reduces the possibility of the service release failure, the possibility of call-drop of all services in the UE and the signaling overhead in the system, improves perception of the users, and avoids the multiple cycles in the processes of RRC connection reestablishment and the RRC connection reconfiguration.

## Claims

1. A method for implementing service release, and the method comprising:
in a process of service release in a non access stratum (NAS) layer, after a radio resource control (RRC) connection reestablishment between a user equipment (UE) and an evolved Node B (eNB) induced by a reconfiguration failure in an access layer of the UE is completed, said eNB including an establishment or modification service list which comprises identities of all services but a service to be released in the UE in a RRC connection reconfiguration message sent to the UE; and
after receiving the RRC connection reconfiguration message, the UE recovering services corresponding to the identities in the establishment or modification service list.

2. The method of claim 1, wherein,
said RRC connection reconfiguration message further includes a deletion service list, and said deletion service list comprises the identities of all services in said UE;
after said UE receives said RRC connection reconfiguration message, the method further comprises: first releasing services corresponding to the identities included in the deletion service list;
said recovering step is: recovering the services corresponding to the identities in the establishment or modification service list.

3. The method of claim 1 or 2, and the method further comprising:
said UE sending a RRC connection reconfiguration completed message to said eNB;
after receiving the message, the eNB sending a service release successful response to a mobility management entity (MME), wherein, the service release successful response includes an identity of the service to be released.

4. The method of claim 1 or 2, the method further comprising:
if said UE fails in the RRC reconfiguration again and resends a RRC connection reestablishment request to said eNB, said eNB responding the UE with a RRC connection reestablishment declined message and responding the MME with a service release failed response.

5. The method of claim 4, the method further comprising:
said eNB sending a UE context release request to said MME; and
after receiving said UE context release request, the MME releasing resource of the UE.

6. A method for implementing service release, and the method comprising:
during a process of service release in a non access stratum (NAS) layer, after a radio resource control (RRC) connection reestablishment between a user equipment (UE) and an evolved NodeB (eNB) induced by a reconfiguration failure in an access layer of the UE is completed, said eNB including a deletion service list which includes an identity of a service to be released in a RRC connection reconfiguration message sent to the UE; and
after receiving said RRC connection reconfiguration message, the UE recovering all services but the service to be released in the UE.

7. The method of claim 6, the method further comprising:
said UE sending a RRC connection reconfiguration completed message to the eNB; and
after receiving said RRC connection reconfiguration completed message, the eNB sending a service release successful response to a mobility management entity (MME), wherein, said service release successful response includes the identity of the service to be released.

8. The method of claim 6, the method further comprising,
if said UE fails in RRC reconfiguration again and resends a RRC connection reestablishment request to said eNB, said eNB responding the UE with a RRC connection reestablishment declined message and responding the MME with a service release failed response.

9. The method of claim 8, the method comprising:
said eNB sending a UE context release request to said MME;
after receiving said UE context release request, the MME releasing resource the UE.

10. A system for implementing service release, said system comprising a user equipment (UE) and an evolved NodeB (eNB); wherein,
said eNB is configured to: during a process of service release in a non access stratum (NAS) layer, after a radio resource control (RRC) connection reestablishment between said UE and said eNB induced by reconfiguration failure in an access layer of said UE is completed, send a RRC connection reconfiguration message to said UE, where said RRC connection reconfiguration message comprises an establishment or modification service list which includes identities of all services but a service to be released in said UE;
said UE is configured to: after receiving said RRC connection reconfiguration message, recover the services corresponding to the identities included in the establishment or modification service list;
thereby supporting the service release.

11. The system of claim 10, wherein,
said RRC connection reconfiguration message further includes a deletion service list which comprises the identities of all services in said UE;
said UE is further configured to: first release the services corresponding to the identities included in the deletion service list.

12. The system of claim 10 or 11, the system further comprising a mobile management entity (MME);
said UE is further configured to: after the services are recovered, send a RRC connection reconfiguration completed message to said eNB;
said eNB is further configured to: after receiving said RRC connection reconfiguration completed message, send a service release successful message to said MME, and said service release successful response includes an identity of a service to be released;
said MME is configured to: receive said service release successful response.

13. The system of claim 10 or 11, wherein,
said UE is further configured to: resend a RRC connection reestablishment request to said eNB after a RRC reconfiguration fails again;
said eNB is further configured to: after receiving said RRC connection reestablishment request again, replying said UE with a RRC connection reestablishment declined message and replying said MME with a service release failed response.

14. The system of claim 13, wherein,
said eNB is further configured to: after receiving said RRC connection reestablishment request again, send a UE context release request to said MME;
said MME is configured to: after receiving said UE context release request, release said UE resource.

15. A system for implementing service release, said system comprising a user equipment (UE) and an evolved nodeB (eNB); wherein,
said eNB is configured to: during a process of service release in a non access stratum (NAS) layer, after a RRC connection reestablishment between said UE and said eNB induced by a reconfiguration failure in an access layer of said UE is completed, send a RRC connection reconfiguration message to said UE, and said RRC connection reconfiguration message includes a deletion service list which includes an identity of a service to be released;
said UE is configured to: after receiving said RRC connection reconfiguration message, recover all services but the service to be released in said UE.

16. The system of claim 15, the system further comprising a mobile management entity (MME);
said UE is further configured to: after the services are recovered, send a RRC connection reconfiguration completed message to said eNB;
said eNB is further configured to: after receiving said RRC connection reconfiguration completed message, send a service release successful response to said MME, and said service release successful response includes the identity of the service to be released;
said MME is configured to: receive said service release successful response.

17. The system of claim 15, wherein,
said UE is further configured to: resend a RRC connection reestablishment request to said eNB after a RRC reconfiguration fails again;
said eNB is further configured to: after receiving said RRC connection reestablishment request again, reply said UE with a RRC connection reestablishment declined message and reply said MME with a service release failed response.

18. The system of claim 17, wherein,
said eNB is further configured to: after receiving said RRC connection reestablishment request again, send a UE context release request to said MME;
said MME is configured to: after receiving said UE context release request, release resource of the UE.

19. An evolved NodeB (eNB) for implementing service release, used in a scenario that in a process of service release in a non access stratum (NAS) layer, a radio resource control (RRC) connection reestablishment between a UE and the eNB induced by a reconfiguration failure in an access layer of said UE is completed, said eNB comprising a transmission module and a list organization module; wherein,
said list organization module is configured to: add identities of all services but a service to be released into an establishment or modification service list;
said transmission module is configured to: send a RRC connection reconfiguration message to said UE, said RRC connection reconfiguration message including the establishment or modification service list.

20. The eNB of claim 19, wherein,
said transmission module is further configured to: include a deletion service list into the RRC connection reconfiguration message, and said deletion service list comprises the identities of all services in said UE.

21. An evolved NodeB (eNB) for implementing service release, used in a process of service release in a non access stratum (NAS) layer, and after a radio resource control (RRC) connection reestablishment between a user equipment (UE) and an evolved NodeB (eNB) induced by a reconfiguration failure in an access layer of said UE is completed, said eNB comprising a transmission module and a list organization module; wherein,
said list organization module is configured to: add an identity of a service to be released into a deletion service list;
said transmission module is configured to: send a RRC connection reconfiguration message to said UE, said RRC connection reconfiguration message including said deletion service list.
